# FASCICULE DE BREVET EUROPEEN

(11) **EP 0 510 355 B1**
(45) Date de publication et mention de la délivrance du brevet: **22.02.1995**
(21) Numéro de dépôt: 92104661.1
(22) Date de dépôt: 18.03.1992
(51) Int. Cl.: G01N 1/10

(54) **Dispositif de prélèvement aseptique d'échantillons de produits**
Vorrichtung zur keimfreien Probenentnahme eines Produktes
Device for sterile product sampling

(30) Priorité: 24.04.1991 CH 1219/91
(43) Date de publication de la demande: 28.10.1992
(73) Titulaire: SOCIETE DES PRODUITS NESTLE S.A., 1800 Vevey (CH)
(72) Inventeur: Hugelshofer, Willy, CH-3510 Konolfingen (CH); Schmied, Rudolf, CH-3510 Konolfingen (CH)

(56) Documents cités:
- WO-A-85/03773
- FR-A- 2 374 629
- SU-A- 855 424
- US-A- 4 653 526
- SOVIET INVENTIONS ILLUSTRATED Week D33, 23 Septembre 1981 Derwent Publications Ltd., London, GB; AN 60080D/33 & SU-A-783 628 (GROZN PROMAVTOMATIK) 30 novembre 1980
- SOVIET INVENTIONS ILLUSTRATED Week C11, 23 Avril 1980 Derwent Publications Ltd., London, GB; AN 19900C/11 & SU-A-672 536 (GORBUNOV V A) 15 juillet 1979
- WPIL (Derwent) abrégé AN82-47711 E/23

## Description

L'invention concerne un dispositif de prélèvement aseptique d'échantillons de produits contenus dans une enceinte elle-même aseptique et à partir de cette enceinte. Un tel dispositif est en particulier prévu dans le domaine alimentaire, notamment pour le prélèvement de produits laitiers frais, réfrigérés ou longue conservation ou dans le domaine pharmaceutique, par exemple pour le contrôle lors du remplissage de poches souples en alimentation entérale ou parentérale.

Le brevet FR 2374629 concerne déjà un tel dispositif de prélèvement aseptique. L'inconvénient de ce dispositif est que la vanne de soutirage de produit ménage entre elle et l'enceinte sur laquelle on prélève une zone morte dans laquelle les produits stagnent, ce qui crée un grand risque de développement bactérien. D'autre part ce dispositif est compliqué, d'un maniement complexe et ne convient pas spécialement pour le soutirage de produits avec morceaux.

Le brevet SU 783628 concerne également un système de prélèvement aseptique à partir d'une conduite de circulation de produit. Ce système comprend une vanne de prélèvement qui traverse diamètralement la conduite de circulation de produit et crèe ainsi des zones de développement bactérien.

Le but de la présente invention est de pallier aux inconvénients mentionnés ci-dessus grâce à un dispositif simple, facile à utiliser et minimisant les risques de contamination .

L'invention concerne un dispositif de prélèvement aseptique d'échantillons de produits contenus dans une enceinte elle-même aseptique et à partir de cette enceinte comprenant une vanne de soutirage de produits, une conduite d'arrivée de vapeur et d'air stérile et une conduite de prélèvement du produit, dans lequel la vanne de soutirage, la conduite d'arrivée de vapeur et d'air stérile et la conduite de prélèvement sont disposés sur le même côté et à l'extérieur de ladite enceinte, la vanne de soutirage comporte un cône d'obturation appuyant, à l'état fermé, sur un siège de vanne, le plan de contact dudit cône avec ledit siège se situant pratiquement au niveau de la surface de l'enceinte, depuis le côté extérieur de ladite surface, dans lequel la conduite d'arrivée de vapeur aboutit directement sur l'espace de tête de la vanne et la conduite de prélèvement de produit est dans le prolongement de celle d'arrivée de vapeur.

L'enceinte sur laquelle on prélève peut être aussi bien une conduite qu'un réservoir. On peut prélever des volumes illimités de produits stériles. Ce dispositif peut être utilisé aussi bien pour des produits liquides, visqueux ou même contenant des morceaux.

L'important selon l'invention est que le cône d'obturation de la vanne soit pratiquement dans le plan formant la surface de l'enceinte : dans ce cas il n'y a pas de produit résiduel qui stagne et par conséquent du côté produit il n'y a pratiquement aucun risque de développement bactérien. Sur le côté du cône d'obturation, non en contact avec le produit en position fermée, c'est-à-dire ce qu'on appelle dans la présente description espace de tête, on fait arriver directement la vapeur permettant de stériliser cet espace de tête. La vapeur balaye ainsi toute la zone allant de l'espace de tête jusqu'à la conduite de prélèvement de produit. Ceci permet ainsi un usage multiple et une restérilisation du dispositif après chaque prélèvement.

Il faut que le produit à prélever, surtout s'il contient des morceaux, puisse arriver sous faible pression au flacon de prélèvement. Pour ce faire, on prévoit un diamètre du siège de vanne sensiblement égal ou double de celui de la conduite de prélèvement de produit.

Pour recueillir le produit on prévoit au bout de la conduite de prélèvement une plaque circulaire avec logement dans lequel on glisse, au moment du prélèvement, le bord supérieur du flacon à remplir. On peut également recueillir le produit à partir d'une conduite souple.

Lorsque le dispositif n'est pas opérationnel, on recouvre la plaque circulaire avec un disque de manière à bien préserver la stérilité de l'ensemble du dispositif.

La suite de la description est faite en référence aux dessins pour permettre de donner tous les éléments du dispositif selon l'invention ainsi que son fonctionnement.

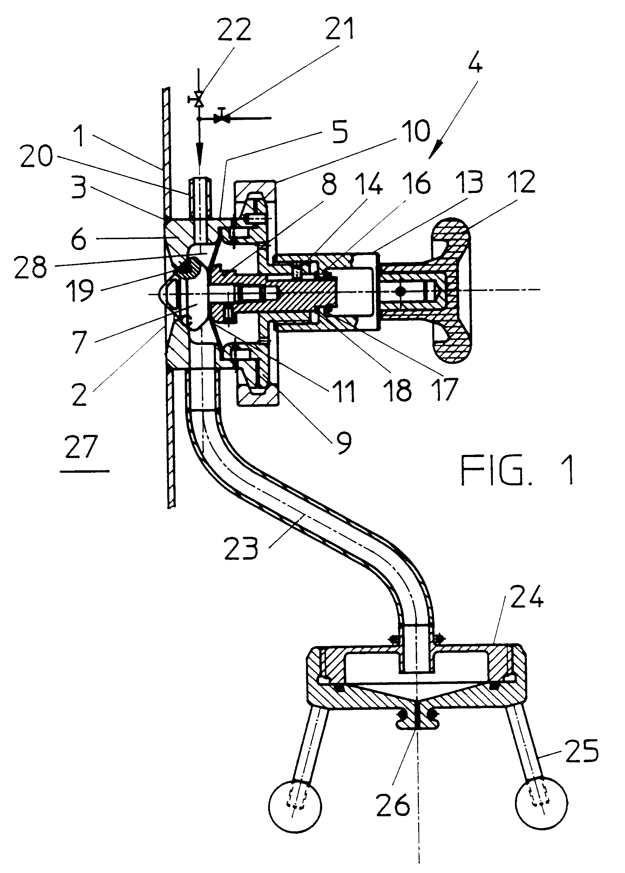

- Fig. 1: représente une coupe partielle du dispositif selon l'invention avant le prélèvement.
- Fig. 2: est une coupe partielle du même dispositif, mais pendant le prélèvement.

Sur la paroi (1) de l'enceinte sur laquelle on veut prélever on opère une ouverture (2) dans laquelle on soude selon (3) une vanne de soutirage (4). Cette vanne comporte un corps de vanne (5) avec un siège de vanne (6) fermé par un cône d'obturation (7) pourvu d'un joint d'étanchéité (19). Ce cône est solidaire d'une tige de guidage (8) susceptible de coulisser dans une partie (9) solidaire du corps de vanne (5) grâce à une bague de serrage (10). L'étanchéité de la vanne est assurée par une membrane souple (11) pincée entre le cône d'obturation (7) et la tige (8) d'une part et le corps de vanne (5) et la partie (9) d'autre part. L'ouverture/fermeture de la vanne est assurée grâce à un bouton (12) solidaire d'une bague cylindrique (13) comportant sur sa partie intérieure un pas de vis (14) épousant un pas de vis correspondant (15) de la partie (9). La bague (13) comprend en outre une protubérance annulaire (16) appuyant contre des butées (17) (18) permettant le déplacement, lors de la rotation du bouton (12), de la tige de guidage (8). Le corps de vanne (5) comporte en outre une conduite (20) d'arrivée de vapeur par la vanne (21) et d'air stérile par la vanne (22) et une conduite (23) de prélèvement de produit. Cette conduite débouche sur une plaque circulaire (24) fermée par un disque (25) comportant un alésage central (26) permettant la sortie d'air stérile et garantissant de bonnes conditions de stérilisation.

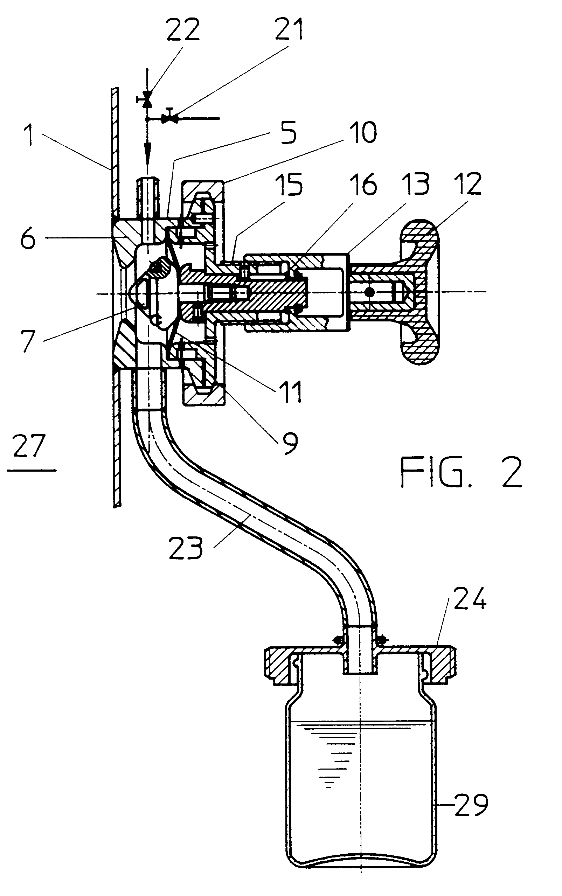

Le fonctionnement du dispositif est le suivant :
Avant de prélever le produit (27), il faut stériliser l'espace de tête (28). Pour ce faire, on ouvre la vanne (21) et on fait arriver de la vapeur à 120°C à une surpression d'environ 1 bar pendant dix minutes. La vapeur s'écoule le long de la conduite (23) jusqu'à l'alésage (26). On ferme ensuite (21) et on ouvre la vanne (22) : on fait arriver de l'air stérile pour permettre de refroidir le système. On laisse couler cet air jusqu'à ce qu'on ait besoin de faire un prélèvement. Avant de faire le prélèvement, on dévisse le disque (25) et on dispose (Fig. 2) un flacon stérile (29) de récupération de produit. On engage le haut du flacon dans le logement (30) de la plaque circulaire (24). Les vannes (21) et (22) étant fermées, on tourne le bouton (12) de la vanne de soutirage, ce qui déplace la bague cylindrique (13) et dégage le cône d'obturation (7) du siège de vanne (6). Le produit (27) s'écoule dans le sens des flèches de la Fig. 2 et on le récupère dans le flacon (29). Lorsque le flacon est rempli, on tourne le bouton (12) dans l'autre sens et on ramène le cône d'obturation sur le siège de vanne (6). La membrane souple (11) assure une bonne étanchéité de la vanne de soutirage (4) et garantit un maniement simple du dispositif selon l'invention.

On retire le flacon (29), on rinse le système de la vapeur condensée qui s'est accumulée, on restérilise avec la vapeur et on laisse à nouveau couler de l'air stérile jusqu'au prochain prélèvement.

## Revendications

1. Dispositif de prélèvement aseptique d'échantillons de produits contenus dans une enceinte elle-même aseptique et à partir de cette enceinte comprenant une vanne (4) de soutirage de produit adaptée pour être soudée sur une paroi extérieure (1) de ladite enceinte, en coopération avec une ouverture (2) de l'enceinte, une conduite (20) d'arrivée de vapeur et d'air stérile et une conduite (23) de prélèvement du produit dans lequel la vanne de soutirage (4), la conduite (20) d'arrivée de vapeur et d'air stérile et la conduite (23) de prélèvement sont disposés sur le même côté et à l'extérieur de ladite enceinte, la vanne de soutirage (4) comporte un cône d'obturation (7) appuyant, à l'état fermé, sur un siège de vanne (6) caractérisé en ce que le plan de contact dudit cône (7) avec ledit siège (6) se situe pratiquement au niveau de la surface de l'enceinte, depuis le côté extérieur de ladite surface, en ce que la conduite (20) d'arrivée de vapeur aboutit directement sur l'espace de tête de la vanne et la conduite (23) de prélèvement de produit est dans le prolongement de celle d'arrivée de vapeur (20).

2. Dispositif selon la revendication 1, caractérisé en ce que le diamètre du siège de vanne (6) est égal au double de celui de la conduite (23) de prélèvement de produit.

3. Dispositif selon l'une des revendications 1 ou 2, caractérisé en ce que la conduite (23) de prélèvement de produit se termine par une plaque circulaire (24) avec un logement pour recevoir le bord supérieur du flacon à remplir.

4. Dispositif selon la revendication 3, caractérisé en ce que la plaque circulaire (24) est fermée par un disque (25) lorsque ledit dispositif n'est pas en fonction.

## Claims

1. A device for the aseptic sampling of products accommodated in an aseptic enclosure from that enclosure, comprising a valve (4) for drawing off products designed to be welded to an outer wall (1) of the enclosure in co-operation with an opening (2) of the enclosure, an inlet pipe (20) for steam and sterile air and a product sampling pipe (23), in which the draw-off valve (4), the inlet pipe (20) for steam and sterile air and the product sampling pipe (23) are arranged on the same side and on the outside of the enclosure and the draw-off valve (4) comprises a closure cone (7) which, in the closed position, rests on a valve seat (6), characterized in that the plane of contact of the cone (7) with the seat (6) is situated substantially level with the surface of the enclosure from the outside thereof, in that the steam inlet pipe (20) opens directly into the head space of the valve and the product sampling pipe (23) is in the extension of the steam inlet pipe (20).

2. A device as claimed in claim 1, characterized in that the diameter of the valve seat (6) is substantially equal to twice the diameter of the product sampling pipe (23).

3. A device as claimed in claim 1 or 2, characterized in that the product sampling pipe (23) is terminated by a circular plate (24) formed with a recess to receive the upper edge of the bottle to be filled.

4. A device as claimed in claim 3, characterized in that the circular plate (24) is closed by a disc (25) when the device is not in use.

## Patentansprüche

1. Vorrichtung zur aseptischen Entnahme von Proben von Produkten, die in einem seinerseits aseptischen Behältnis enthalten sind, aus diesem Behältnis, die ein Ventil (4) zum Produktabzug, das so ausgelegt ist, daß es an einer Außenwand (1) des Behältnisses unter Zusammenwirkung mit einer Öffnung (2) des Behältnisses angeschweißt sein kann, eine Leitung (20) für die Zufuhr von Dampf und steriler Luft und eine Leitung (23) zur Entnahme des Produkts umfaßt und in der das Abzugventil (4), die Leitung (20) für die Zufuhr von Dampf und steriler Luft und die Entnahmeleitung (23) auf derselben Seite und außerhalb des Behältnisses angeordnet sind, wobei das Abzugventil (4) einen Verschlußkegel (7) besitzt, der im geschlossenen Zustand auf einem Ventilsitz (6) aufliegt, dadurch gekennzeichnet, daß die Kontaktebene zwischen dem Kegel (7) und dem Sitz (6), von der Außenseite dieser Oberfläche aus, praktisch in Höhe der Oberfläche des Behältnisses liegt, daß die Leitung (20) für die Dampfzufuhr direkt in den Kopfraum des Ventils mündet und daß die Leitung (23) zur Entnahme des Produkts in der Verlängerung der Leitung (20) für die Dampfzufuhr liegt.

2. Vorrichtung nach Anspruch 1, dadurch gekennzeichnet, daß der Durchmesser des Ventilsitzes (6) gleich dem Zweifachen des Durchmessers der Leitung (23) zur Entnahme des Produkts ist.

3. Vorrichtung nach einem der Ansprüche 1 oder 2, dadurch gekennzeichnet, daß die Leitung (23) zur Entnahme des Produkts mit einer kreisförmigen Platte (24) mit einer Aufnahme für den oberen Rand der zu füllenden Flasche endet.

4. Vorrichtung nach Anspruch 3, dadurch gekennzeichnet, daß die kreisförmige Platte (24) durch eine Scheibe (25) geschlossen ist, wenn die Vorrichtung nicht in Betrieb ist.
